Europäisches Patentamt

**European Patent Office**

**Office européen des brevets**

(19)

(11) Publication number: **0 170 495**
**A2**

(12) # EUROPEAN PATENT APPLICATION

(21) Application number: **85305278.5**

(22) Date of filing: **24.07.85**

(51) Int. Cl.⁴: **C 04 B 7/00**
**C 04 B 24/24**

(30) Priority: **25.07.84 GB 8418940**

(43) Date of publication of application:
**05.02.86 Bulletin 86/6**

(84) Designated Contracting States:
**AT BE CH DE FR IT LI LU NL SE**

(71) Applicant: **BLUE CIRCLE INDUSTRIES PLC**
**Portland House Stag Place**
**London SW1E 5BJ(GB)**

(72) Inventor: **Hiorns, Frederick John**
**15 Oxenden Wood Road Chelsfield Park**
**Orpington Kent, BR6 6HR(GB)**

(72) Inventor: **Sheer, Alan Christopher**
**27 Mill Crescent**
**Tonbridge Kent, TN9 1PE(GB)**

(74) Representative: **Grundy, Derek George Ritchie et al,**
**CARPMAELS & RANSFORD 43, Bloomsbury Square**
**London WC1A 2RA(GB)**

(54) **Cementitious compositions.**

(57) A cementitious composition comprises (a) an hydraulic cement comprising at least 65% by weight of hydraulic calcium silicate, e.g. tricalcium silicate, and (b) a water-soluble or water-dispersible organic polymer. The hydraulic cement preferably comprises not more than 7% by weight of $Al_2O_3$, not more than 6% by weight of $Fe_2O_3$ and not more than 4% by weight of $SO_3$, and may be partially replaced by a mineral aggregate or extender. The polymer is present in an amount of up to 15% by weight of the cement and other mineral components and is preferably a partially hydrolysed poly(vinyl acetate). The compositions are rendered settable by the inclusion of water, the set products having excellent wet dimensional stability.

CEMENTITIOUS COMPOSITIONS

Field of the Invention

The present invention relates to cementitious compositions comprising an hydraulic cement and a water-soluble or water-dispersible organic polymer, and to cementitious products produced from such compositions.

Background to the Invention

Although the flexural strength of normal constructional cements is generally low, typical values being about 5 MPa, various methods are known whereby an increase in the flexural strength may be obtained. One such method is to reinforce the cementitious composition by means of fibres, for example of asbestos, glass, steel, ceramic, synthetic resin or vegetable material. However, fibre reinforcement suffers from the disadvantages that the flexural strengths obtained are still relatively modest at about 40 MPa, that the improvement in the flexural strength may not be isotropic, and that the rheological properties of the cementitious composition may be impaired.

It has also been disclosed that cementitious compositions having a higher flexural strength, typically about 150 MPa, may be prepared by mixing a water-soluble or a water-dispersible polymer with an hydraulic cement under conditions of high shear, as disclosed in European Patent Specification No. 0,055;035 (Imperial Chemical Industries PLC). The polymer acts as a processing aid which permits closer packing of the cement particles than can normally be achieved. Furthermore, the amount of water that is required for processing the composition is less than that which is required for conventional cement compositions. By appropriate selection of the polymer and of the proportions in which the hydraulic cement, polymer and water are mixed together, a composition is obtained that can be rolled into a workable sheet, formed into shaped articles and used in applications hitherto open only to such materials as metals, ceramics and plastics.

The only types of hydraulic cement that are described in EP-A-0,055,035 are aluminous cements and calcium silicate cements of the Portland type. Although calcium aluminate cement is preferred, it is a relatively expensive material. A more serious disadvantage of this type of cement is that, although the wet flexural strengths of products manufactured from it remain adequate at about 40-50 MPa, such products are liable to deformation; in particular, the wet dimensional stability is poor and 5-10% swelling in water will commonly occur. Hence, for example, a decorative panel based on this material and wetted on one side by rain may warp severely. Commercial calcium silicate cements such as white Portland cement are, in general, cheaper than aluminate cements; however, they too have been found to suffer from the problem of poor wet dimensional stability, which in most cases will be even more severe than with aluminate cements. Furthermore, such calcium silicate cements have the further disadvantages that their rheology in the required mix ratios is relatively poor and that they generally give much shorter working times than can be obtained with aluminate cement.

Summary of the present invention

The present invention provides a cementitious composition comprising an hydraulic cement and a water-soluble or water-dispersible organic polymer, wherein at least 65% by weight of the hydraulic cement consists of hydraulic calcium silicate.

The cementitious compositions of this invention are rendered settable by the inclusion of water and the present invention also provides a cementitious product produced by the setting of such an aqueous composition.

Description of preferred embodiments

The hydraulic cement consisting substantially of hydraulic calcium silicate preferably comprises at least 85%, particularly preferably at least 95% and especially at least 98%, by weight of hydraulic calcium silicate. A calcium silicate is considered hydraulic for the purposes of this invention if it shows hydraulicity under hardening conditions that are normal in cement technology, usually room temperature (20°C) and atmospheric pressure. Suitable materials are tricalcium silicate ($C_3S$), beta-dicalcium silicate ($\beta$-$C_2S$) and mixtures thereof.

The $C_3S$ may be in the form of the monoclinic, triclinic or trigonal (rhombohedral) polymorph or a mixture of any of these. $C_3S$ in the substantially pure form has hitherto been produced and investigated only in the laboratory: see, for example, R.T.H. Aldous, "The Hydraulic Behaviour of Rhombohedral Alite", Cement and Concrete Research, Volume 13(1983), pages 89-96. $\beta$-$C_2S$ is described, for example, by D.L. Kantro and C.H. Weise in "Hydration of Various $\beta$-Dicalcium Silicate Preparations", J. Amer. Ceram. Soc., 1979, 62, pp 621-626.

For the very test results, the hydraulic calcium silicate should contain as much $C_3S$ as possible. However, $C_3S$ produced on a commercial scale will usually contain a proportion (commonly up to 30%, typically 20-30%, by weight) of $\beta$-$C_2S$ and such a material has proved to be satisfactory.

The remainder of the hydraulic cement will normally comprise the phases $C_3A$ and/or $C_4AF$, free lime and such inorganic materials (e.g. such mineralisers as calcium fluoride) as may be required in the production of the calcium silicate material and/or for the stabilisation of the calcium silicate phases present in the hydraulic cement. However, the hydraulic cement should not contain more than 6% by weight of iron expressed as $Fe_2O_3$. Similarly, although a small amount of alumina ($Al_2O_3$) may also be required to stabilise certain phases, the hydraulic cement should not contain more than 7% by weight of aluminate expressed as $Al_2O_3$. It is particularly preferred that the cement should contain not more than 1% by weight of iron expressed as $Fe_2O_3$ and not more than 1% by weight of aluminate expressed as $Al_2O_3$, since above those levels they cannot be accommodated by direct substitution in the calcium silicate crystal structure. Furthermore, levels of $Al_2O_3$ and $Fe_2O_3$ above 1% may necessitate longer hardening times, as explained hereinafter.

The hydraulic cement should contain not more than 4% by weight of sulphate, expressed as $SO_3$. With an increase in the total quantity of $Al_2O_3$ and $Fe_2O_3$, especially above 2% by weight of the hydraulic cement, there is a decrease in the amount of sulphate that can be tolerated: if the total amount of $Al_2O_3$ and $Fe_2O_3$ in the hydraulic cement is 4% by weight or more, the amount of sulphate should be 1% by weight or less.

The cementitious compositions of the present invention may also contain, in addition to the hydraulic cement, other mineral components. These include any of the conventional particulate aggregates known in cement technology, for example sand (any aggregate, however, preferably having a maximum particle size of 200 μm or less), and/or any of the conventional extenders used in cement technology, for example slag, fly ash, pozzolana or silica fume. Such additions will preferably have particle-size distributions that will favour maximum packing densities of the assemblies of particles making up the composite.

Such aggregates and extenders - which may be regarded as mineral fillers - may be present (if at all) in an amount of, in general, up to 50%, preferably up to 30% and especially up to 15%, relative to the total weight of the hydraulic cement and mineral filler.

The polymer - which term herein includes both homopolymers and copolymers - is preferably selected such that a test composition comprising 100 parts by weight of the mineral content (i.e. the hydraulic cement and, if present, any extender or aggregate), 5 parts by weight of the polymer and 16 parts by weight of water, when extruded in a capillary rheometer, undergoes an increase of at least 25% in shear stress when a ten-fold increase in the shear rate of the test composition is effected when the shear rates as measured are within the range 0.1 to $5s^{-1}$. This capillary rheometer test is described in detail in EP-A-0,055,035 (the teaching of which European patent specification is incorporated herein by reference).

Suitable polymers include vinyl acetate polymers. Although a copolymer of vinyl acetate and a copolymerisable monomer may be employed, the preferred polymer is poly(vinyl acetate). It is preferred that the vinyl acetate polymer be partially hydrolysed, the degree of hydrolysis being preferably at least 50% and particularly preferably in the range of 70 to 90%. The molecular weight of the vinyl acetate polymer will in general be at least 3,000 and up to, for example, 125,000.

Other polymers that can be useful under certain circumstances but that do not pass the above rheometer test include cellulose ethers, polyacrylamides and alkylene oxide polymers.

Usually, the water-soluble or water-dispersible organic polymer will be present in an amount of up to 15%, preferably from 1 to 15% and especially from 3 to 8%, by weight of the mineral components (i.e. the hydraulic cement and, if present, the extender and aggregate) in the compositions.

It will be understood, of course, that the polymer component of the compositions may be constituted by two or more suitable polymers.

The amount of water used to prepare a settable composition should normally be sufficient to enable a plastic composition to be obtained that can be formed into shaped articles;  such a composition will normally have a dough-like consistency.  Usually, the amount of water required is at least 5% by weight of the total composition.  It is normally advantageous to use the minimum amount of water that is necessary to obtain such a composition and it is especially preferred that the amount of water should not exceed 25% by weight of the total composition.  Thus, the amount of water may appropriately be less than 18% or even less than 12% by weight of the total composition.

The composition of the present invention may comprise other  components, for example processing aids.  For example, it may be beneficial to include a plasticizer for the polymer component, for example glycerol, and/or a hydration accelerator for the cement component, for example calcium chloride or calcium formate.

The settable compositions of this invention may be produced simply by mixing the hydraulic cement, water, polymer and any other components.  The components may be mixed in any desired order:  for preference, however, the dry solid components are mixed together first and the liquid components are added after, although it would also be possible for the polymer and the water to be mixed first to produce an aqueous solution or dispersion which is then mixed with the other components.

A typical procedure for obtaining the settable composition involves the step of dry mixing the solid components, in particular the mineral components (the cement and, if present, mineral filler) and the polymer, for a period of from 20 to 60 seconds, e.g. about 30 seconds, after which water and, if required, glycerol are added and the mixture is subjected to further mixing until a dry crumble is obtained, the further mixing stage usually taking from 20 to 90 seconds, for example about 60 seconds. The aforesaid dry mixing and wet mixing steps are typically carried out at a temperature of from 5 to 40°C, preferably at ambient temperature, and under ambient conditions of humidity and atmospheric pressure.

It is essential to mix the components thoroughly in order to obtain a uniform composition and this may be achieved by subjecting the mixture to high shear, for example by compounding in a bladed high shear mixer and/or by passing the composition repeatedly through a twin-roll mill or the like, or by vacuum extrusion. The high-shear mixing step is typically carried out for one to eight minutes in order to give a homogeneous, cohesive material.

The settable composition obtained by thoroughly mixing the components may be formed into shaped articles, for example rods, tubes or sheets, by extrusion moulding or compression moulding. The moulding stage may, for example, be effected at a temperature of from 15 to 110°C, typically from 80 to 100°C, under a pressure of from 2 to 20 MPa, typically from 4 to 15 MPa, for a period of from 5 minutes to 24 hours, typically from 30 to 60 minutes. Whatever the method of production however, the operation should be such as to discourage the retention of entrained air by, for example, maintaining pressure until the material has hardened sufficiently to retain its moulded shape. This process may be hastened if appropriate by maintaining the composition at an elevated temperature; furthermore, the pressing may also be effected under conditions of high humidity. After release of the pressure, further curing under ambient conditions or high-humidity curing may be carried out.

In order to obtain good wet properties, in particular flexural strength and elastic modulus, one should ensure that sufficient hardening of the composite has occurred before the pressure is released after setting. Insufficient pressing may give a product of poor dimensional stability. The period for which a composition must be held under pressure is dependent upon the composition of the cement. It has been found that when the cement contains a significant amount of $\beta$-$C_2S$, sulphate ($SO_3$), $Fe_2O_3$ or $Al_2O_3$, it is usually necessary to effect pressing of the composition for an extended period. For instance, the presence of 3% $Al_2O_3$ or $Fe_2O_3$ may necessitate pressing times at 100°C of 2 or 5 hours respectively whereas a composition containing 0.5% $Fe_2O_3$ and/or 0.5% $Al_2O_3$ (by weight of the cement) may require only 30 minutes under pressure. The cement contains preferably not more than 1% $SO_3$; ideally, it contains substantially no $SO_3$. Preferably, no more than 30% by weight of the cement should comprise $\beta$-$C_2S$.

The present invention permits the production of cementitious compositions which have excellent wet dimensional stability, strength and flexural moduli and also excellent dry strength, modulus and rheological properties.

The present invention is hereinafter illustrated in and by specific Examples, which are preceded by comparative Examples exemplifying the prior art. In the Examples, all parts and percentages are by weight, unless otherwise stated. In the analyses of the cements herein the various components are represented by the symbols customary in cement technology, where S designates $SiO_2$, A designates $Al_2O_3$, F designates $Fe_2O_3$, and C designates CaO. The oxide analyses were determined by X-ray fluorescence and the phase analyses by X-ray diffraction.

Comparative Example A

A calcium aluminate cement (Secar 71) was used, this having an oxide analysis of 0.4% S, 70.5% A, 0.1% F and 28.7% C, and a phase analysis of 6% $C_{12}A_7$, 44% CA, 30% $CA_2$ and 20% $\propto$-$Al_2O_3$.

100 parts of the calcium aluminate cement and 6 parts of hydrolysed poly(vinyl acetate) (Gohsenol KH17S) were mixed dry, and 0.6 parts of glycerol and 11 parts of water were added. Further mixing produced a dry crumble, which was formed into a cohesive sheet by repeated rolling on a twin-roll mill. After cutting to size the sheet was pressed in a hydraulic press between poly(ethylene terephthalate) sheets at a temperature of 80°C and 5 MPa pressure for a period of 10 minutes. Upon removal from the press and after drying at 80°C for 16 hours, the cementitious sheet had the following properties (the properties of a bar of ordinary cement paste prepared by casting at a water/cement ratio of 0.28 are given for comparison):

|  | Calcium aluminate cement/ hydrolysed poly(vinyl acetate) sheet | Ordinary cast cement bar after 28 days' cure at room temperature |
| --- | --- | --- |
| Flexural Strength | 144 MPa | 13 MPa |
| Elastic Modulus | 47 GPa | 8 GPa |
| Density | 2390 kg/m$^3$ | 1930 mg/m$^3$ |

Upon total immersion of the Secar/polymer sheets in water at 20°C for given periods of time, the sheets were surface-dried and tested without further drying. The following properties were obtained:

| Duration of immersion: | . | 7 days | 56 days |
|---|---|---|---|
| Flexural Strength | | 93 MPa | 50 MPa |
| Elastic Modulus | | 27 GPa | 18 GPa |
| Weight increase over dry | | 1.8% | 5.7% |
| Thickness swelling over dry | | 3.3% | 7.3% |
| Warpage | | 2.3% | 5.1% |

The warpage quoted here refers to total immersion, not one-sided wetting, and is therefore the result of the combined effects of non-uniform pore distribution between the two surfaces of the sheet (resulting from manufacture on a roll) and the characteristic response of the material in question to water absorption.   The effect of single-sided wetting would be expected to be more adverse.

The warpage is calculated as follows.  The longitudinal dimension of the warped sheet is regarded as an arc having a chord length L (in other words, L is the straight-line, longitudinal distance between opposite edges of the sheet).  The maximum distance, measured perpendicularly from the chord, between the sheet and the chord is X, the warpage being defined as X/L expressed as a percentage.

The use of composites of this type based on calcium aluminate cement for applications in a completely dry state is very attractive and can be recommended.  Serious doubts about the long-term durability exist however with particular reference to the dimensional stability of the sheets produced;  warpage and thickness swelling have been found to be of importance and would render the material unsuitable  for  any application involving non-uniform exposure to water, such as the cladding of buildings.

Comparative Example B

Sheets containing a commercial white cement of the Portland type (Blue Circle "Snowcrete") were manufactured by a procedure similar to that used for Example A except that 12 parts of water were used.

The "Snowcrete" had an oxide analysis of 22.3% S, 4.5% A, 0.3% F, 67.7% C and 2.3% $SO_3$, and a phase analysis of 59% $C_3S$, 20% $C_2S$, 11% $C_3A$ and 1% $C_4AF$.

The moulded sheets had the following properties after drying at 80°C:

| | |
|---|---|
| Flexural Strength | 85 MPa |
| Elastic Modulus | 31 GPa |
| Density | 2390 kg/m$^3$ |

This material, although somewhat less strong than the rolled material described in Example A, is nevertheless of substantially superior dry properties to the ordinary cement material described in Example A. After immersion in water at 20°C, the sheet possessed the following properties:

| Duration of immersion: | 7 days | 56 days |
|---|---|---|
| Flexural Strength | 24 MPa | 29 MPa |
| Elastic Modulus | 16 GPa | 20 GPa |
| Weight increase over dry | 11.2% | 13.0% |
| Thickness increase over dry | 9.4% | 13.0% |
| Warpage | 6.4% | 8.9% |

This Example shows that although a conventional calcium silicate cement can give material of high dry strength, the effect of water immersion is substantially more adverse than it is with the calcium aluminate cement. Dimensional stability and warpage are particularly poor.

Comparative Example C

A high early strength cement (prepared according to the teaching of GB-A-1,498,057 and containing trigonal $C_3S$ instead of the conventional monoclinic) was used to manufacture sheets using a procedure similar to that of Example A and with 11 parts of water.

The high early strength cement had an oxide analysis of 22.2% S, 2.9% A, 1.3% F, 66.8% C and 3.3% $SO_3$, and a phase analysis of 69% $C_3S$, 12% $C_2S$, 5% $C_3A$ and 4% $C_4AF$.

The moulded cement sheets had the following properties after drying:

| | |
|---|---|
| Flexural Strength | 49 MPa |
| Elastic Modulus | 23 GPa |
| Density | 2290 $kg/m^3$ |

After immersion at 20°C for the stated periods, the wet sheet possessed the following properties:

| Duration of immersion: | 7 days | 56 days |
|---|---|---|
| Flexural Strength | 19 MPa | 27 MPa |
| Elastic Modulus | 12 GPa | 17 GPa |
| Weight increase over dry | 14% | 14% |
| Thickness swelling over dry | 13% | 13% |
| Warpage | 5.1% | 7.5% |

The dimensional stability and flexural strength were poor.

Example 1

An hydraulic cement consisting essentially of trigonal tricalcium silicate was prepared in the following manner. Calcium carbonate (high grade chalk) and silica (ceramic grade sand) were proportioned to give tricalcium silicate when blended with 1% by weight of calcium fluoride and 0.5% by weight of alumina, the resultant mixture being fired twice at 1,500°C in an open oil-fired laboratory furnace for 1 hour. The clinker was ground between the burns. After the second burn, which was effected in order to reduce the free lime content, the clinker was ground to a surface area of 400 $m^2/kg$.

The resultant hydraulic cement had an oxide analysis of 25.8% S, 0.5% A, 0.2% F and 71.0% C, and a phase analysis of 98% $C_3S$ . It contained substantially no $SO_3$.

The said hydraulic cement was used to manufacture sheets by means of a procedure similar to that described in Example A, except that 10 parts of water were employed. The cement/polymer sheet had the following properties after drying:

| Flexural Strength | 74 MPa |
| Elastic Modulus | 39 GPa |
| Density | 2300 $kg/m^3$ |

After immersion in water, the wet sheet possessed the following properties.

| Duration of immersion (20°C): | 7 days | 56 days |
| --- | --- | --- |
| Flexural Strength | 30 MPa | 31 MPa |
| Elastic Modulus | 28 GPa | 32 GPa |
| Weight increase over dry | 6.7% | 6.7% |
| Thickness swelling over dry | 0.6% | 1.6% |
| Warpage | 0 | 0 |

The most significant advantage of this composite over the prior art resides in the enhanced wet dimensional stability. This allows the possibility of exterior applications for this type of composite. A further advantage of the invention is that, although the wet strength and modulus are lower than those obtained with the calcium aluminate system, the fall in these properties on wetting is not progressive: the material is of stable properties after wetting whereas the calcium aluminate shows progressive deterioration over the range of times tested.

Example 2

The procedure of Example 1 was followed except that the sheet was not dried at 80°C after pressing but was allowed to stand at 20°C for 7 days in a normal atmosphere. The sheet had the following dry properties after this time:

| | | |
|---|---|---|
| Flexural Strength | | 74 MPa |
| Elastic Modulus | | 30 GPa |
| Density | | 2340 kg/m$^3$ |

After immersion in water at 20°C, the sheet had the following properties:

| Duration of immersion: | 7 days | 56 days |
|---|---|---|
| Flexural Strength | 39 MPa | 43 MPa |
| Elastic Modulus | 29 GPa | 32 GPa |
| Weight increase over dry | 5.6% | 6.3% |
| Thickness swelling over dry | 1.2% | 1.8% |
| Warpage | 0 | 0 |

Again the same trend was observed as in Example 1, but with enhanced strength when wet. Dimensional stability when wet remained at a good level.

A further comparison is made below in terms of the wet strengths of the materials of comparative Example A and Example 2 relative to the respective dry strengths:

| | Secar 71 | | $C_3S$ (Ex. 2) | |
|---|---|---|---|---|
| Duration of immersion: | 7d | 56d | 7d | 56d |
| % of dry Flexural Strength | 64 | 35 | 53 | 58 |
| % of dry Elastic Modulus | 56 | 38 | 96 | 108 |
| % of Weight increase over dry | 1.8 | 5.7 | 5.6 | 6.3 |
| % Thickness swelling over dry | 3.3 | 7.3 | 1.2 | 1.8 |
| Warpage | 2.3 | 5.1 | 0 | 0 |

This clearly demonstrates the strength retention of the particular trigonal $C_3S$ cement used when wet and shows the advantage of a stable composition.

Example 3

An hydraulic cement consisting essentially of triclinic tricalcium silicate was produced as follows. Calcium carbonate (high grade chalk having an alumina content of 0.4%) and silica (a ceramic grade sand) were proportioned to give tricalcium silicate when blended with 1% of calcium fluoride. The resultant mixture was fired at 1500°C for one hour in an open oil-fired laboratory furnace. The resultant clinker was ground to a surface area of 400 $m^2$/kg. The cement obtained in this manner had ~~a phase~~ an oxide analysis of 25.6% S, 0.3% A, 0.1% F and 71.9% C, and a phase analysis of 99% $C_3S$ having the triclinic morphology. $SO_3$ was sub-stantially absent.

The hydraulic cement and a hydrolysed poly(vinyl acetate) were mixed and moulded to form sheets in a manner similar to that of Example 2, except that the mixture was hot pressed at 100°C. The resultant sheet had the following dry properties:

| Flexural Strength | 77 MPa |
| Elastic Modulus | 28 GPa |
| Density | 2400 kg/$m^3$ |

After immersion in water at 20°C for either 7 days or 56 days, the sheet had the following properties:

| Duration of immersion: | 7 days | 56 days |
| --- | --- | --- |
| Flexural Strength | 45 MPa | 48 MPa |
| % of dry Flexural Strength | 58 | 62 |
| Elastic Modulus | 31 GPa | 35 GPa |
| % of dry Elastic Modulus | 111 | 125 |
| Weight increase over dry | 4.4% | 4.6% |
| Thickness swelling over dry | 1.4% | 1.5% |
| Warpage | 0 | 0 |

Example 4

An hydraulic cement consisting essentially (98 percent) of monoclinic tricalcium silicate was produced following the method of Example 1, except that 1.0% alumina was blended in, giving a final cement containing 1.4% $Al_2O_3$ and 0.1% $Fe_2O_3$. This cement contained substantially no $SO_3$.

Sheets were manufactured from the hydraulic cement and hydrolysed poly(vinyl acetate) by the method described in Example 1, except that pressing at 80°C was effected for 30 minutes with one batch of sheets ("batch A") and for 120 minutes for another batch ("batch B"). The sheets had the following dry properties:

|  | Batch A | Batch B |
| --- | --- | --- |
| Flexural Strength | 58 MPa | 86 MPa |
| Elastic Modulus | 24 GPa | 36 GPa |
| Density | 2190 kg/m$^3$ | 2400 kg/m$^3$ |

After immersion in water (20°C) for either 7 or 56 days, the wet sheets possessed the following properties:

|  | Batch A | | Batch B | |
| --- | --- | --- | --- | --- |
| Duration of immersion: | 7d | 56d | 7d | 56d |
| Flexural Strength (MPa) | 27 | 31 | 35 | 39 |
| Elastic Modulus (GPa) | 22 | 22 | 32 | 34 |
| Weight increase over dry (%) | 10.4 | 12.1 | 5.6 | 6.2 |
| Thickness swelling (%) | 6.2 | 7.1 | 0.8 | 1.8 |
| Warpage (%) | 1.5 | 2.5 | 0.3 | 0.8 |

The above example illustrates the importance of the effect of the pressing conditions upon compositions having a high content of $Al_2O_3$.

Example 5

An hydraulic cement consisting essentially (95 percent) of triclinic tricalcium silicate was prepared following the procedure of Example 4, except that 1.2% of $Fe_2O_3$ was blended into the mix instead of $Al_2O_3$. This produced a cement containing 0.3% $Al_2O_3$ and 1.9% $Fe_2O_3$. This cement contained substantially no $SO_3$.

The hydraulic cement and hydrolysed poly(vinyl acetate) were formed into sheets as in Example 4, one batch ("batch A") being hot pressed for 30 minutes and another batch ("batch B") being hot pressed for 120 minutes. The resultant sheets had the following dry properties:

|                    | Batch A | Batch B |
|--------------------|---------|---------|
| Flexural Strength  | 43 MPa  | 52 MPa  |
| Elastic Modulus    | 17 GPa  | 24 GPa  |
| Density            | 2400 kg/m$^3$ | 2350 kg/m$^3$ |

After immersion in water (20°C) for the periods stated below, the wet sheets had the following properties:

|                              | Batch A | | Batch B | |
|------------------------------|-----|------|-----|------|
| Duration of immersion:       | 7d  | 56d  | 7d  | 56d  |
| Flexural Strength (MPa)      | 27  | 35   | 25  | 32   |
| Elastic Modulus (GPa)        | 13  | 22   | 28  | 33   |
| Weight increase over dry (%) | 7.7 | 10.0 | 4.0 | 4.7  |
| Thickness swelling (%)       | 6.5 | 9.5  | 1.4 | 1.6  |
| Warpage (%)                  | 0.6 | 0.8  | 0.1 | 0.3  |

The above example illustrates the importance of the effect of the pressing conditions upon compositions having a high content of $Fe_2O_3$.

Example 6

An hydraulic cement containing 99% triclinic $C_3S$, as described in Example 3, and a hydrolysed poly(vinyl acetate) were mixed and then moulded into sheets using the procedure of Example 3, except that 10% of the cement was replaced by silica fume. The resultant sheets had the following dry properties:

|                   |              |
|-------------------|--------------|
| Flexural Strength | 66 MPa       |
| Elastic Modulus   | 26 GPa       |
| Density           | 2360 kg/m$^3$ |

After immersion in water (20°C) for the periods stated below, the sheets had the following properties:

| Duration of immersion:   | 7 days | 56 days |
|--------------------------|--------|---------|
| Flexural Strength        | 40 MPa | 46 MPa  |
| Elastic Modulus          | 28 GPa | 35 GPa  |
| Weight increase over dry | 4.6%   | 5.1%    |
| Thickness swelling       | 0.9%   | 1.6%    |
| Warpage                  | 0      | 0       |

The above example demonstrates that a cement/ polymer composite having excellent properties, especially with regard to dimensional stability, may still be obtained, even when an inert mineral filler is included.

Example 7

An hydraulic cement consisting essentially (98 percent) of $\beta$-$C_2S$ was prepared in the following manner. Calcium carbonate (high grade chalk) and silica (ceramic grade sand) were proportioned to give $\beta$-$C_2S$ and were mixed with 0.6% boric acid. The resultant mixture was fired at 1450°C for one hour in an open oil-fired laboratory furnace. The clinker was ground to a surface area of 400 $m^2$/kg. Analysis of the resultant cement indicated a content of $Al_2O_3$ of 0.3% and a content of $Fe_2O_3$ of 0.3%. $SO_3$ was substantially absent.

Sheets were manufactured from the hydraulic cement and a hydrolysed poly(vinyl acetate) in accordance with the method of Example 1. The resultant sheets had the following dry properties:

| | |
|---|---|
| Flexural strength | 45 MPa |
| Elastic modulus | 24 GPa |
| Density | 2210 $kg/m^3$ |

After immersion in water for the stated period at 20°C, the sheets exhibited the following properties:

| Duration of immersion: | 7d | 56d |
|---|---|---|
| Flexural strength | 9 MPa | 19 MPa |
| Elastic modulus | 7 GPa | 13 GPa |
| Weight increase over dry | 10.1% | 12.9% |
| Thickness swelling | 1.1% | 2.3% |
| Warpage | 0.3% | 0.8% |

Although the hydraulic cement contained only a low concentration of $Al_2O_3$ and of $Fe_2O_3$, the wet flexural strength was poor owing to the slow rate of

hydration of the $\beta$-$C_2S$. The dimensional stability, however, was satisfactory.

The properties of the cement/polymer sheets containing the $\beta$-$C_2S$ cement could be improved if, after pressing as described above, the sheets were cured at 80°C and at 100% relative humidity (conditions which can be adopted for accelerated curing) for 7 days and dried under ambient conditions for 7 days. Sheets that had been cured and dried in this manner exhibited the following dry properties:

| | |
|---|---|
| Flexural strength | 55 MPa |
| Elastic modulus | 31 GPa |
| Relative density | 2050 kg/m$^3$ |

After immersion in water for the stated period at 20°C, the sheets exhibited the following wet properties:

| Duration of immersion: | 7d | 56d |
|---|---|---|
| Flexural strength | 17 MPa | 24 MPa |
| Elastic modulus | 18 GPa | 24 GPa |
| Weight increase over dry | 7.5% | 7.7% |
| Thickness swelling | 0.1% | 0.6% |
| Warpage | O | O |

Thus, satisfactory wet strengths and elastic moduli were achieved and the dimensional stability was excellent.

Flexural strengths and moduli obtained by the present invention are at least of similar magnitudes to those of current high strength cement products, such as asbestos cement and glass fibre reinforced cement, and offer many advantages.

It will of course be understood that the present invention has been described above purely by way of example, and modifications of detail can be made within the scope and spirit of the invention.

## CLAIMS

1. A cementitious composition comprising an hydraulic cement and a water-soluble or water-dispersible organic polymer, characterised in that at least 65% by weight of the hydraulic cement consists of hydraulic calcium silicate.

2. A composition according to claim 1, characterised in that at least 85% by weight of the hydraulic cement consists of hydraulic calcium silicate.

3. A composition according to claim 1 or 2, characterised in that the hydraulic calcium silicate is tricalcium silicate, beta-dicalcium silicate or a mixture thereof.

4. A composition according to claim 3, characterised in that the hydraulic cement contains not more than 7% by weight of aluminate (expressed as $Al_2O_3$), not more than 6% by weight of iron (expressed as $Fe_2O_3$) and not more than 4% by weight of sulphate (expressed as $SO_3$).

5. A composition according to any one of claims 1 to 4, characterised in that the hydraulic cement contains not more than 1% by weight of aluminate (expressed as $Al_2O_3$) and not more than 1% by weight of iron (expressed as $Fe_2O_3$).

6. A composition according to any one of claims 1 to 5, characterised in that the polymer is selected such that a test composition comprising 100 parts by weight of the mineral components, 5 parts by weight of the polymer and 16 parts by weight of water, when extruded in a capillary rheometer, undergoes an increase of at least 25% in shear stress when a 10-fold increase in the shear rate of the test composition is effected when the shear rates as measured are within the range 0.1 to 5 $s^{-1}$.

7.   A composition according to claim 6, characterised in that the polymer is a partially hydrolysed vinyl acetate polymer.

8.   A composition according to any one of claims 1 to 5, characterised in that the polymer is selected from cellulose ethers, polyacrylamides and alkylene oxide polymers.

9.   A composition according to any one of claims 1 to 8, characterised in that the polymer is present in an amount of up to 15% by weight of the mineral components.

10.   A composition according to any one of claims 1 to 9, characterised in that it also comprises water in an amount sufficient to render the composition settable.

11.   A composition according to claim 10, characterised in that it comprises water in an amount of from 5% to 25% by weight of the total composition.

12.   A cementitious product, characterised in that it has been prepared by the setting of a cementitious composition according to claim 10 or 11.